Europäisches Patentamt

European Patent Office

Office européen des brevets

(19)

(11) **EP 0 769 501 B1**

(12) **EUROPEAN PATENT SPECIFICATION**

(45) Date of publication and mention
of the grant of the patent:
**12.06.2002   Bulletin 2002/24**

(51) Int Cl.[7]: **C08B 30/14**, A23L 1/0522

(21) Application number: **96305974.6**

(22) Date of filing: **15.08.1996**

(54) **Food process**

Lebensmittelherstellung

Préparation d'aliments

(84) Designated Contracting States:
**AT BE CH DE DK ES FI FR GB GR IE IT LI NL PT
SE**

(30) Priority: **20.10.1995  EP 95307488**

(43) Date of publication of application:
**23.04.1997   Bulletin 1997/17**

(73) Proprietors:
• **UNILEVER PLC**
**London EC4P 4BQ (GB)**
Designated Contracting States:
**GB IE**
• **UNILEVER N.V.**
**3013 AL Rotterdam (NL)**
Designated Contracting States:
**BE CH DE DK ES FI FR GR IT LI NL PT SE AT**

(72) Inventors:
• **Boerboom, Johannes Henricus Jozeph,
Unilever Res.
3133 AT Vlaardingen (NL)**
• **Coert, Daniel Stephen, Unilever Res.
3133 AT Vlaardingen (NL)**
• **Van Dijk, Wietse, Unilever Res.
3133 AT Vlaardingen (NL)**

(74) Representative: **Sikken, Antonius H. J. M. et al
UNILEVER N.V.,
Patent Division,
P.O. Box 137
3130 AC Vlaardingen (NL)**

(56) References cited:
**EP-A- 0 490 557          WO-A-92/18325
WO-A-93/22938**

• **STARKE, vol. 38, no. 2, 1986, WEINHEIM DE,
pages 40-44, XP002037626 R.W. KINGLER ET
AL.: "Einfluss der Art der Energieübertragung
auf strukturelle und funktionelle Merkmale von
Stärke."**

**Description**

The present invention relates to a process for the production of powdered sheared amylopectin.

Starches are widely used in food applications as thickeners or bodying agents of starch-thickened foods: starch-thickened foods being any fluid, pasty or semi-solid food product in which a, preferably native, starch-based thickening agent is used to impart a degree of thickening. Examples of such foods include sauces, soups or gravies, creams.

Starch consists of granules which have ordered structures which are semi-crystalline and birefringent. Chemically, starches mainly consist of two types of polysaccharides, amylose and amylopectin. Amylose is an essentially linear 1-4-linked alpha-D-glucose and amylopectin is a highly branched macromolecule consisting of short chains of 1-4-linked alpha-D-glucose with 1-6-linked branches.

When starch granules are heated in water at a specific temperature (the gelatinization temperature, usually 55°C to 70°C), the granules swell irreversibly and the amylose is preferentially solubilized. During this gelatinization, the granule birefringence and crystallinity disappear and a viscous solubilized paste is formed. The swollen starch granules, upon cooling to room temperature, show a strong tendency to associate with each other through hydrogen-bonding between hydroxyl groups. This phenomenon is called retrogradation. In dilute starch solutions the amylose slowly aligns itself in parallel fashion to give insoluble bundles, which render the solution opaque and may cause precipitates. In more concentrated solutions (5% by weight and higher) the amylose molecules associate in random fashion and give a reticulated network of a gel.

If the starch gel is frozen, the freezing causes the separation of discrete ice crystals and this water does not reconstitute uniformly when the system is thawed. As a consequence, the starch paste loses its capacity to retain water and a watery phase is separated by syneresis.

If an appreciable level of native starch (containing amylose) is used in the food product, the product may lose its smooth creamy consistency upon freezing and become lumpy or curdled in texture, and reheating will usually not restore the original appearance of the product. The effect is even worse when the product is subjected to a number of freeze-thaw cycles. While the effect is less pronounced in non-frozen systems, the product may also become gelled/lumpy when stored under chill or ambient conditions, even without freezing - a phenomenon that is sometimes described as "set-back" in a sauce; once this happens the gel will not melt on reheating.

The so-called waxy starches, which essentially consist of amylopectins, and their physically and/or enzymatically modified derivatives, associate only with difficulty because of their branched nature. They crystallise very slowly and if any precipitate is formed, it can easily be re-dispersed by heating it in water above 50°C. The problem is, however, that if these waxy starches are used at a relatively high level in food products to prevent syneresis from occurring upon re-heating after freezing, an unacceptable slimy or slippery texture is obtained. Some chemically modified waxy starches may also demonstrate this problem.

Therefore on the one hand, food products containing native, amylose-containing starches, do not have freeze-reheat stability and, on the other hand, if attempts are made to improve the freeze-reheat stability by using mainly amylopectin-based starches (waxy starches), an unacceptable texture is obtained.

The invention described in WO 93/22938 solves this problem: WO 93/22938 discloses a starch-thickened liquid foodstuff having improved freeze-reheat stability and good texture comprising a native starch component and an amylopectin component. Within the foodstuff, the amylopectin component constitutes the continuous phase. The amylopectin component is manufactured by cooking an amylopectin component source to gelatinise the starch present, and subjecting the cooked amylopectin component source to shear forces to break down the cooked starch granule structure and solubilise the amylopectin component. Preferably, the amylopectin component source is a waxy starch.

In the examples of WO93/22938, the cooking and the shearing are conducted independently of one another. This method of manufacturing an amylopectin component has several disadvantages. Firstly, the amylopectin component source must be diluted with a large quantity of water prior to cooking to form a solution having at least 70% by weight water. Otherwise, the cooking of the amylopectin component source results in a mixture which is too viscous to shear. Secondly, if there is not sufficient water and the mixture is too viscous, effective hydration of the starch granules is hindered. Thirdly, cooking and shearing a solution containing at least 70% by weight water results in a liquid product from which a large quantity of water has to be removed, if the desired dry product is to be formed. The dry product is then preferably milled to form a dry powder. Although drying may be effected by drum-drying or spray-drying, both processes are awkward to use for such a wet product; spray-drying is particularly awkward in this respect. These processes are also uneconomical. Further, a solution having less than 30% amylopectin component source eventually results in a powder which is difficult to disperse; it wets too easily and forms into a lump rather than dispersing.

The present invention seeks to provide an improved process for preparing sheared amylopectin, by the use of an extruder.

DE3206751 describes a method for producing foamed, gelatinised starch-containing cereal products by extrusion in the presence of a gasing agent.

EP 0303460 relates to the preparation of a pregelatinised starch product by extruding a starch composition in the presence of a minor amount of water in order to form a highly adsorbent starch product.

US5211971 describes the application of expanded pregelatinised starch-containing cereal products for culturing lactic acid bacteria. Preferably, the starch-containing cereal source is extruded rye flour, which may be pregelatinised during extrusion.

Gums and Stabilisers for the food industry 3, ed. by G O Phillips, D J Wedlock, P A Williams, Elsevier, London-New York (1986), pages 213-220, includes an article entitled "Extruded starches - product analysis, structure and properties" which discusses the pregelatinisation of starch via extrusion. It states that product properties depend principally on the extent of starch gelatinisation, and on the molecular degradation of amylose and amylopectin by the shear forces generated by the screws; by close control of the process parameters, gelatinisation and degradation can be varied to give a wide range of technical properties in the product.

GB 1306384 discloses the extrusion of a mixture containing an amylopectin product. The starch is gelatinised in an extruder barrel having a temperature of 93-177°C, and extruded through a die having a temperature of 38-100°C. The use of this low-temperature die prevents break down of the gelatinised starch, resulting in a starch product having excellent shape-retaining properties (ie. being highly viscous).

In contrast, in the present invention, extruder barrels having a lower temperature are used (see table 1), because gelatinisation of the starch is not necessary at that stage; a die having a high temperature (120-220°C) is then used, to gelatinise the starch whilst breaking it down to form a dry powder. The resulting starch powder forms 10% solutions having low viscosity.

In US 2427328, wet waxy starch (moisture content 30%) is fed through a gelatinisation vessel such as a screen conveyor having open steam jets. The starch is gelatinised by the steam (which increases the water content) and is then dried. The gelatinised starch is not broken down using this process, as evidenced by the ready dispersibility of the product in cold water and its capacity for high water adsorption, resulting in highly viscous pastes.

Similarly, US 3251702 relates to a process for preparing a product which is readily-disperible in cold water. Starch is gelatinised in a barrel having a temperature of 100-204°C, and is extruded as a highly-viscous, porous cylinder of rigid, foamed material. In contrast to the present invention, the gelatinised starch is not broken down during extrusion.

According to the present invention there is provided a process for the production of powdered sheared amylopectin, the process comprising extruding a farinaceous material comprising greater than 83% by weight amylopectin, optionally mixed with water; wherein the water content of the material under extrusion, including any added water, is in the range of from 6 to 30% by weight, and the temperature of the material during extrusion is in the range of from 120 to 220°C.

The temperature of the material during extrusion is preferably in the range of from 140 to 200°C, more preferably 140 to 185°C, and most preferably 170 to 185°C. The temperature of the material during extrusion corresponds to the temperature of the extruder die, and not to the extruder barrel(s).

The water content of the material under extrusion is preferably in the range of from 12 to 24% by weight, and more preferably 12 to 18% by weight.

Using this process, the farinaceous material is extruded at a temperature high enough to gelatine the starch, which is then broken down by the shear forces in the extruder to form a dry powder, which is suitable for subsequent milling.

Adding water is optional, not compulsory, in order to obtain the sheared amylopectin. At a water content of greater than 30% by weight, a glass-like product is extruded, which is too hard (ie. too solid) to subsequently mill.

The farinaceous material is preferably a so-called waxy starch for example, waxy cereal starches, such as waxy maize starch, and waxy rice starch; waxy tuber starches; waxy fruit and legume starches; waxy root starches; mutant waxy starches; hybrid waxy starches; modified waxy starches (chemically and/or physically and/or enzymatically modified waxy starches). Examples of such starches are heat-moisture-treated starches, starches which have been reacted with a monofunctional reagent to introduce substituents such as phosphate, adipate, acetate, hydroxyalkyl or succinate groups) and mixtures thereof. The farinaceous material can also be cereal or root starches, such as wheat or potato, from which the amylose has been separated or otherwise rendered unavailable to interact with the native starch component that is used to thicken the foodstuff.

The preferred waxy starches are waxy cereal starches, waxy root starches, mutant waxy starches and mixtures thereof. Even more preferred waxy starches are cereal starches such as waxy maize starch and waxy rice starch and mixtures thereof.

Preferably, the farinaceous material comprises at least 90% by weight amylopectin. As stated above, suitable materials are waxy rice starch (95% by weight amylopectin) and waxy maize starch (98-100% by weight amylopectin). Unsuitable materials, for which the process of the present invention does not work, are native starches such as potato starch (79% by weight amylopectin), tapioca flour (83% by weight amylopectin) and rye flour (less than 83% by weight amylopectin).

An extruder suitable for the process of the invention comprises a generally cylindrical casing enclosing a pair of parallel, co-rotatable feedscrews along the length of which the farinaceous material is delivered from a hopper at the back of the device, forward to an extrusion plate at the front. The length to diameter ratio of the extruder is preferably between 11 and 22. An air gap of no more than 2mm is preferably provided between the end of the screws and the extrusion plate.

The extruder may be provided with electrical induction heating, which allows the extruder to heat to the required temperature, and then controls the amount of heat in the extruder so that heat produced by friction during the extrusion process is compensated for.

The process of this invention results in dry sheared amylopectin which is readily dispersible in water, preferably as a clear grey or light yellow solution, having no burnt-off taints. A yellow-brown coloured solution is also acceptable.

Under the conditions claimed, the starch granules formed are adequately sheared such that they are broken down to soluble amylopectin, and the sliminess characteristics of unsheared cooked amylopectin are eliminated.

The resultant powdered sheared amylopectin is functional in terms of causing amylose to phase separate in the same way as freshly prepared sheared amylopectin, such that the amylopectin molecules remain essentially intact and retain their ability to phase separate with amylose.

## DETAILED DESCRIPTION OF THE INVENTION

Examples of the products and processes of the invention will now be described to illustrate, but not to limit, the invention.

Examples 1 to 14

Powdered waxy maize starch and, optionally, water were fed into a twin screw extruder, having three barrels, and mixed in the extruder to give the required water content of the mixture (over a range of 6 to 30% by weight). For examples 4 to 8, the waxy maize starch was pre-dried, to reduce its natural moisture content of about 12% to 5.2%. The barrel temperatures and extrusion gap were adjusted such that, when in equilibrium, the material would exit from the extruder at the required temperature (over a range of 120-220°C). The material was then extruded and, for each example, samples of the resultant sheared amylopectin were cooled and ground to a powder in a hammer mill. The extrusion conditions for each of examples 1 to 14 are shown in Table 1.

The waxy maize starch was obtained from CPC under code 04201 (Cerestar).

The extruder used was a Clextral® BC 45 cooker extruder having a length of 100cm and fitted with twin flight screw elements and one reverse element.

In examples 1 to 14, the screw elements were rotating at 296 rpm.

Table 1 = Conditions of Extrusion

KEY TO THE TABLE

$MC^s$ = moisture (ie. water) content of waxy maize starch prior to processing
$MC^F$ = moisture (ie water) content of waxy maize starch during extrusion (including any added water)
B1 Temp = temperature of the first barrel during extrusion
B2 Temp = temperature of the second barrel during extrusion
B3 Temp = temperature of the third barrel during extrusion
Prod Temp = temperature of the material, including any added water, on extrusion
QWMS = quantity of powdered waxy maize starch added to the extruder
QH20 = quantity of water added to the extruder
Amps = electrical energy used
Pressure = pressure in extruder resulting from the screws and the mixture to be extruded.

In all the tables, the viscosity values are in mPas, measured at a shear rate of approx 50 sec$^{-1}$, measured after freezing and reheating.

Table 2 and Table 3 = Results

Tables 2 and 3 show the results of evaluation tests conducted on the resultant extruded sheared amylopectin samples. Table 3 illustrates the relationship between the temperature of the material on extrusion and the water content of the material being extruded.

Table 2, column 2 describes for each example the visible appearance of the sheared amylopectin upon extrusion.

Table 2, columns 3 and 4 show the results of a dispersibility test on a solution of 10% sheared amylopectin; this test is described below.

100g of powder was added to 900g water and whisked for 30 seconds using an electric handwhisk. Visual observations were carried out immediately and after 2 hours.

Dispersibility was assessed by visually observing how easily the powder mixed into the water when whisking. A score was given for this parameter; 1 being very poor and 10 being very good. Any other observations were also recorded at this stage.

The colour was noted and recorded at this initial stage and, after standing for 2 hours, the solution was observed to see if the powder had settled out or remained in solution.

Microscopy was also carried out on solutions of 10% sheared amylopectin samples, under phase contrast, to see if any starch granules were present. Samples of sheared amylopectin were placed on a glass slide and spread out into a thin layer under a coverslip. The samples were viewed under a X20 phase objective with corresponding illuminating annulus on a Leitz DMRB light microscope. The results are shown in Table 2, column 6, and in table 3 under "Starch Remnants"

The relative thicknesses of solutions of 10% sheared amylopectin were assessed visually after dispersion and compared with a freshly prepared solution of sheared amylopectin (for example, prepared in accordance with the teaching of WO93/22938) at room temperature. Subsequently frozen and reheated samples were measured at 60°C in a Contraves® 115 rheometer via a step-wise protocol over a shear range of 10 to 500 sec$^{-1}$ and viscosity values at approx 50 sec$^{-1}$ were obtained. The thickness values and viscosity values are shown in Table 3. (For comparison, a freshly prepared solution of 10% sheared amylopectin has a viscosity of about 100mPas at approx 50 sec$^{-1}$).

Also referring to Table 3, overall functionality was assessed from the properties of the sheared amylopectin alone and from its interaction with amylose/wheatstarch, as described below, the key to these functionalities being:-

under = under sheared, such that fragments of unbroken starch remain and/or viscosity is high (>100 mPas at 50 sec$^{-1}$)

O.K. = optimally sheared, such that starch granules are completely broken down and lumpiness is prevented (ie. amylose is caused to phase separate)

over = over sheared, such that lumpiness is not prevented (ie. amylose is not caused to phase separate) NB. very low viscosity and smaller glucose chain lengths are pointers.

Preparation of amylose extract

A 5% wheatstarch solution was prepared by slurrying the starch with some of the water and heating the rest of the water to boiling au bain-marie. The wheatstarch slurry was added to this and it was held at 95°C for 45 minutes to allow the starch to become fully gelatinised. Any water lost after 45 minutes was added back, then the hot solution was centrifuged (in a warmed centrifuge) at 10,000rpm for 50 minutes . The supernatant was decanted and kept at 70°C - this contained the amylose solution, which contains approx. 1.5 - 2.0% amylose and approx. 0.5% other solids - (mostly amylopectin).

Preparation of amylose extract and sheared amylopectin mixtures

Solutions of 10% sheared amylopectin were warmed to 70°C in a waterbath, along with some distilled water. The amylose extract was added hot to the sheared amylopectin in the following amounts for each sample:

60g amylose extract + 40g 10% solution of sheared amylopectin (to give 4% sheared amylopectin)

60g amylose extract + 20g 10% solution of sheared amylopectin + 20g water (to give 2% sheared amylopectin)

The samples were then frozen and after 2 days they were defrosted to see if the sample had retrograded or remained smooth. Retrograded samples were warmed to see if they became smooth with heat.

Preparation of wheatstarch and sheared amylopectin mixtures

10% solutions of sheared amylopectin were diluted with distilled water to give 4% and 2% sheared amylopectin. 5% wheatstarch was added to the cold sheared amylopectin mix and this was brought to the boil whilst stirring, to prevent the starch from sticking to the pan, while allowing it to gelatinise. The starch solution was then packed into bags and cooled in iced water before freezing and holding at -20°C for 2 days.

For amylose extract and sheared amylopectin mixtures

For the sheared amylopectin and amylose extract, direct microscopy was used to see if the sheared amylopectin had caused the amylose extract to phase separate in to beadlets. A portion of amylose extract in sheared amylopectin was placed on a glass slide, surrounded by Iodine solution and left for 2-3 minutes for the Iodine solution to infiltrate the sample. Excess Iodine solution was then removed from the edges using absorbent paper and the sample spread into a thin film under a coverslip as before. The slides were viewed under a X20 objective lens on the Leitz DMRB microscope giving a total magnification of X246 on the printout from the OASIS Image Archiving and Filing System. (The Iodine Solution was prepared by shaking 2g KI, followed by 1g Iodine, in about 10cm$^3$ distilled water until dissolved and making the solution up to 500cm$^3$).

After 2 days at -20°C the amylose extract and sheared amylopectin mixtures were defrosted at room temperature and then reheated to visually assess the solutions for lumpiness. If the sample was lumpy then retrogradation had occurred, suggesting that the sheared amylopectin had not phase separated the amylose extract into beadlets. If the sample was smooth then the sheared amylopectin was functional in preventing retrogradation.

For wheatstarch and sheared amylopectin mixtures

After 2 days at -20°C the wheatstarch and sheared amylopectin mixtures were defrosted at room temperature and then reheated to visually assess the solutions for lumpiness. If the sample was lumpy then retrogradation had occurred, suggesting that the sheared amylopectin had not phase separated the amylose in the wheatstarch into beadlets. If the sample was smooth then the sheared amylopectin was functional in preventing retrogradation.

The effects on wheatstarch extract (for example, the prevention of the formation of amylose gel, and amylose visible as beadlets or as a film) are shown in Table 2, column 5.

Finally, the sheared amylopectin samples were subjected to Nuclear Magnetic Resonance (NMR) to estimate molecular weight. The samples were $D_2O$ exchanged prior to measurement and then dispersed in $D_2O$ at 3% w/w by heating and whirlymixing. Their $^1H$ NMR spectra were acquired at 90°C, 10 secs recycle time (90° pulses) with very weak solvent presaturation. Samples were measured on the inverse probe. Estimates of molecular weight were determined by calculating the average number of glucose residues per reducing end, from the integral of the β reducing end compared to the α-(1→4) resonance = 100. N.B. These values become increasingly unreliable as the length gets larger, with errors in values of 6000 easily being as large as ± 50 % and possibly greater.

The glucose residue figures, for each sample of powdered sheared amylopectin, are shown in Table 3. For comparison, freeze dried sheared amylopectin has about 11400 glucose residues per reducing end, and cooked (unsheared) amylopectin has at least 11000 glucose residues per reducing end.

From Tables 2 and 3, it can be seen that the samples prepared at higher temperatures gave darker colours when preparing a 10% solution of sheared amylopectin. They also had less glucose residues and, visually, appeared thinner.

Dispersibility of the powder in 90% water was slightly worse at higher moisture contents, although the most difficulty was seen with the samples of low bulk density (examples 12 and 13), which did not have very good dispersibility and had a foamy layer on their surface after mixing. More starch fragments and higher viscosities were seen as the moisture content was increased.

At higher moisture contents and lower temperatures the amylopectin was undersheared and retained some of the slimy characteristics of the original amylopectin starch; conversely, at higher temperatures, the starch was oversheared and more of it was needed to cause amylose to separate into beadlets. When the sheared amylopectin was functional, a smooth material was obtained; when it was not functional, a lumpy/pulpy appearance was seen.

In examples 14, 2 and 3, the fragments contained in the 10% solutions were there, possibly, due to incomplete dispersion rather than inadequately broken down starch granules, since these extruded products were cystalline in nature.

The glucose residue figures suggest that the extrusion process results in a slight breakdown of the amylopectin molecules, but not to the extent that the functionality of the sheared amylopectin is impaired. A slight breakdown of the amylopectin molecules is also illustrated by the fact that the 10% solutions of sheared amylopectin prepared in accordance with this invention are thinner than 10% solutions of freshly prepared sheared amylopectin (for example, as prepared in accordance with the teaching of WO93/22938).

From Table 3, it can be seen that the relationship between the temperature of the material on extrusion and the moisture content of the material being extruded can be approximately graphically represented as follows, where the shaded area represents the conditions for producing powdered sheared amylopectin having excellent functionality.

Although extruding materials having temperatures of 140 to 200°C and moisture contents of 8 to 24 wt% are preferred, powdered sheared amylopectin with acceptable functionality can be prepared by extruding materials having temperatures of 120 to 220°C and moisture contents of 6 to 30 wt%. However, the most preferred temperatures of the materials on extrusion are 140 to 185°, and the most preferred moisture contents of the materials being extruded are 12 to 18 wt%.

Examples 15 to 17

The extrusion and evaluation methods described above in relation to examples 1 to 14 were also conducted in respect of rye flour and tapioca flour, both having amylopectin contents of 83 wt% or less, and waxy rice starch (remyline AC from Remy Industries, Belgium) which has an amylopectin content of 98 wt%.

Table 4 shows the conditions of extrusion used, whilst Table 5 shows the results of the evaluation tests.

KEY TO TABLE 4

Qfl = quantity of flour added to the extruder.

Both the rye and tapioca flours were easy to disperse, the rye flour giving a brown colour and the tapioca flour giving a white colour. The 10% solutions had many fragments when viewed under the microscope and neither prevented amylose gels from occurring, and there were no amylose beadlets when mixed with amylose extract.

The waxy rice starch was fairly easy to disperse; the 10% solution had many fragments which viewed under the microscope; when mixed with wheat starch, it was functional in preventing retrogradation.

## Table 1

| Example No. | QWMS (Kg/h) | QH$_2$0 (Kg/h) | MC$^S$ (wt%) | MC$^F$ (wt%) | Prod Temp (°C) | Pressure (bar) | Amps (I) | B1 Temp (°C) | B2 Temp (°C) | B3 Temp (°C) |
|---|---|---|---|---|---|---|---|---|---|---|
| 1 | 40 | 0 | 11.89 | 11.89 | 140 | 54 | 21 | 17 | 46 | 141 |
| 2 | 40 | 2.6 | 11.89 | 17.27 | 143 | 39 | 19 | 18 | 60 | 100 |
| 3 | 40 | 4 | 11.89 | 19.90 | 145 | 39 | 18 | 27 | 27 | 84 |
| 4 | 40 | 1.8 | 5.2 | 9.28 | 121 | 124 | 27 | 20 | 20 | 32 |
| 5 | 40 | 1.8 | 5.2 | 9.28 | 184 | 83 | 23 | 19 | 19 | 66 |
| 6 | 40 | 1.4 | 5.2 | 8.41 | 197 | 70 | 22 | 18 | 20 | 98 |
| 7 | 37 | 1.2 | 5.2 | 8.18 | 201 | 56 | 22 | 18 | 21 | 131 |
| 8 | 35 | 1.2 | 5.2 | 8.34 | 219 | 46 | 18 | 19 | 25 | 173 |
| 9 | 40 | 6.1 | 12.6 | 24.16 | 125 | 42 | 20 | 16 | 91 | 177 |
| 10 | 40 | 2.7 | 12.6 | 18.13 | 174 | 52 | 28 | 33 | 77 | 148 |
| 11 | 40 | 0 | 12.6 | 12.60 | 171 | 43 | 21 | 19 | 24 | 84 |
| 12 | 40 | 2.7 | 12.6 | 18.13 | 195 | 38 | 19 | 17 | 22 | 70 |
| 13 | 40 | 0 | 12.6 | 12.60 | 198 | 55 | 23 | 17 | 21 | 47 |
| 14 | 40 | 10.3 | 11.89 | 29.93 | 175 | 25 | 16 | 16 | 31 | 255 |

## Table 2

| Sample | Powder | Dispersibility | | 10% Solution after 2 hours | | Effect on Wheatstarch extract | | Microscopy 10% Solution |
|---|---|---|---|---|---|---|---|---|
| | | Score | Comment | Colour | Comment* | Prevents Amylose gel | Amylose particles | |
| 1 | Granular powder | 10 | | yellow | smalll amount of undissolved sludge | | 2% some clumped beadlets | very few, tiny particles |
| 2 | Granular powder | 9 | | light yellow/green | small amount of undissolved sludge | | 2% some clumped beadlets | few intact many fragments |
| 3 | Fine powder | 6 | many small white bits | bright yellow | some bits even after heating | | 2% mostly clumped beadlets | few intact many fragments |
| 4 | Fine powder | 9 | | yellow/brown | thin* | | 2% some clumped beadlets | very few, tiny particles |
| 5 | Fine powder | 10 | | yellow/brown | thin* | 4%, 2% borderline | beadlets at 4%, gel fragments at 2% | none |
| 6 | Fine powder | 10 | | dark yellow | thin* | 4% borderline | few fagments of gel | few fragments |
| 7 | Fine powder | 9 | burnt smell | dark brown | v.thin* | | 4% clumps of beadlets | very few, tiny particles |
| 8 | Fine powder | 7 | burnt smell, a few lumps | dark brown | v.thin* | | 4% few small fragments of gel | none |
| 9 | Granular powder | 9 | small amount of sludge | grey | v.thin* | 4% borderline | lots of film & some beadlets | very few, tiny particles |
| 10 | Granular powder | 9 | small a mount of sludge | grey | v.thin* | 4% borderline | lots of film & some beadlets | very few, tiny particles |
| 11 | Granular Powder | 10 | | yellow | small amount of undissolved sludge | 4% borderline | lots of film & some beadlets | none |
| 12 | Low bulk density | 6 | a few white specks | light yellow | foam layer on surface; v. thin* | 4% borderline | pale film and beadlets | quite a lot of fragments |
| 13 | Low bulk density | 6 | a few white specks | light yellow | foam layer on surface; v.thin* | 4% borderline | film and bealets | few intact, many fragments |
| 14 | Crystalline flakes | 9 | small amount of sludge | grey/yellow | needed heating to dissolve/thick | | 2% some clumped beadlets | very few, tiny particles |

when compared with freshly prepared 10% solution of sheared amylopectin

EP 0 769 501 B1

## Table 3

| Temp °C | Moisture Content | 8% | 12% | 18% | 20% | 24% | 30% |
|---------|------------------|-----|------|------|------|------|------|
| | Sample No | 4 | 1 | 2 | 3 | 9 | |
| 121-145 | Colour<br>Dispersibility<br>Starch remnants<br>Relative Thickness*<br>Viscosity<br>Glucose residues<br>Functionality | y.brown<br>9<br>v.few<br>thin<br>8.6<br>980<br>under/OK | yellow<br>10<br>v.few<br>similar<br>11.7<br>1800<br>OK | l.yellow<br>9<br>fragments<br>similar<br>23.8<br>6300<br>OK/under | yellow<br>6<br>fragments<br>similar<br>32.9<br>15700<br>Under | grey<br>9<br>v.few<br>v.thin<br>33.5<br>9000<br>Over | |
| | Sample No | 5 | 11 | 10 | | | 14 |
| 171-184 | Colour<br>Dispersibility<br>Starch remnants<br>Relative Thickness*<br>Viscosity<br>Glucose residues<br>Functionality | y.brown<br>10<br>none<br>thin<br>18.6<br>1050<br>OK | yellow<br>10<br>none<br><br>33.4<br>2700<br>OK | grey<br>9<br>v.few<br><br>25.5<br>2400<br>OK/Over | | | grey/yel<br>9 (heat)<br>v.few<br>thick<br>37.9<br>6300<br>OK |
| | Sample No | 6 | 13 | 12 | | | |
| 195-198 | Colour<br>Dispersibility<br>Starch remnants<br>Relative Thickness*<br>Viscosity<br>Glucose residues<br>Functionality | dark yel<br>10<br>v.few<br>thin<br>12<br>610<br>OK | l.yellow<br>6<br>fragments<br>v.thin<br>28.1<br>5200<br>OK | l.yellow<br>6<br>fragments<br>v.thin<br>28.5<br>7000<br>OK/Over | | | |

* (as for Table 2)

continues......

Table 3 (continued)

| Temp °C | Moisture Content | 8% | 12% | 18% | 20% | 24% | 30% |
|---|---|---|---|---|---|---|---|
| | Sample No | 7 | | | | | |
| 201 | Colour<br>Dispersibility<br>Starch remnants<br>Relative Thickness*<br>Viscosity<br>Glucose residues<br>Functionality | d.brown<br>9<br>v.few<br>v.thin<br>8.5<br>380<br>Over | | | | | |
| | Sample No | 8 | | | | | |
| 219 | Colour<br>Dispersibility<br>Starch remnants<br>Relative Thickness*<br>Viscosity<br>Glucose residues<br>Functionality | d.brown<br>7<br>none<br>v.thin<br>6.6<br>310<br>Over | | | | | |

EP 0 769 501 B1

## Table 4

| eg No | Sample | Q fl (Kg/h) | QH$_2$0 (Kg/h) | MC$^s$ (wt %) | MC$^f$ (wt %) | Prod Temp (°C) | Pressure (bar) | Amps (I) | B1 temp (°C) | B2 temp (°C) | B3 temp (°C) |
|---|---|---|---|---|---|---|---|---|---|---|---|
| 15 | Extruded rye flour | 40 | 0 | 12.00 | 12.00 | 190 | 50 | 20 | 15 | 22 | 129 |
| 16 | Extruded tapioca flour | 37.5 | 0 | 10.90 | 10.90 | 198 | 46 | 20 | 18 | 27 | 95 |
| 17 | Waxy Rice Starch | 32.5 | 0 | 13.18 | 13.18 | 175 | 36 | 18 | 17 | 26 | 118 |

EP 0 769 501 B1

Table 5

| eg. No | Sample | Powder | Dispersibility | | 10% solution after 2 hours | | Effect on wheat-starch extract | | Microscopy on 10% solution | Viscosity |
|---|---|---|---|---|---|---|---|---|---|---|
| | | | Score | Comment | Colour | Comment | Prevent amylose gel | Amylose particle | | |
| 15 | rye flour - extruded | Flour | 9 | - | brown | settles out | No | lots of amylose film | many fragments | 29.4 |
| 16 | tapioca flour - extruded | Flour | 9 | - | brown | gel | No | lots of amylose film | many networked fragments | 238.5 |
| 17 | Waxy Rice Starch | - | - | fair | - | - | 2% border line | - | many fragments | - |

**Claims**

1. A process for the production of powdered sheared amylopectin, the process comprising extruding a farinaceous material comprising greater than 83% by weight amylopectin, optionally mixed with water; wherein the water content of the material under extrusion, including any added water, is in the range of from 6 to 30% by weight, and the temperature of the material during extrusion is in the range of from 120 to 220°C.

2. A process as claimed in claim 1, wherein the farinaceous material comprises greater than 90% by weight amylopectin.

3. A process as claimed in any preceding claim, wherein the temperature of the material during extrusion is in the range of from 140 to 200°C.

4. A process as claimed in claim 3, wherein the temperature of the material during extrusion is in the range of from 140 to 185°C.

5. A process as claimed in any preceding claim, wherein the water content of the material under extrusion is in the range of from 12 to 24% by weight.

6. A process as claimed in claim 5, wherein the water content of the material under extrusion is in the range of from 12 to 18% by weight.

7. A process as claimed in any preceding claim, wherein the farinaceous material is a waxy starch.

8. A process as claimed in claim 7, wherein the farinaceous material is selected from the group consisting of waxy maize starch, waxy rice starch and mixtures thereof.

9. A process as claimed in any preceding claim, wherein the extrusion is conducted in an extruder having at least two screw elements.

10. Powdered sheared amylopectin prepared in accordance with the process claimed in any preceding claim.

11. A starch-thickened foodstuff comprising amylopectin prepared in accordance with the process claimed in any one of claims 1 to 9.


**Patentansprüche**

1. Verfahren zur Herstellung von pulvrigem scherzerkleinertem Amylopectin, umfassend:

    Extrudieren eines stärkehaltigen Materials, das mehr als 83 Gew.-% Amylopectin, gegebenenfalls mit Wasser vermischt, umfaßt, wobei der Wassergehalt des Materials, das dem Extrudieren unterworfen wird, einschließlich zugesetzten Wassers, im Bereich von 6 bis 30 Gew.-% liegt und die Temperatur des Materials während des Extrudierens im Bereich von 120 bis 220°C liegt.

2. Verfahren nach Anspruch 1, wobei das stärkehaltige Material mehr als 90 Gew.-% Amylopectin umfaßt.

3. Verfahren nach einem der vorangehenden Ansprüche, wobei die Temperatur des Materials während des Extrudierens im Bereich von 140 bis 200°C liegt.

4. Verfahren nach Anspruch 3, wobei die Temperatur des Materials während des Extrudierens im Bereich von 140 bis 185°C liegt.

5. Verfahren nach einem der vorangehenden Ansprüche, wobei der Wassergehalt des Materials, das dem Extrudieren unterworfen wird, im Bereich von 12 bis 24 Gew.-% liegt.

6. Verfahren nach Anspruch 5, wobei der Wassergehalt des Materials, das dem Extrudieren unterworfen wird, im Bereich von 12 bis 18 Gew.-% liegt.

**7.** Verfahren nach einem der vorangehenden Ansprüche, wobei das stärkehaltige Material eine Wachsstärke ist.

**8.** Verfahren nach Anspruch 7, wobei das stärkehaltige Material aus der Gruppe bestehend aus Wachsmaisstärke, Wachsreisstärke und Gemischen davon ausgewählt wird.

**9.** Verfahren nach einem der vorangehenden Ansprüche, wobei das Extrudieren in einem Extruder durchgeführt wird, der mindestens zwei Schneckenelemente hat.

**10.** Pulvriges scherzerkleinertes Amylopectin, das nach dem Verfahren nach einem der vorangehenden Ansprüche hergestellt ist.

**11.** Stärkeverdicktes Lebensmittel, das Amylopectin umfaßt, das gemäß dem Verfahren nach einem der Ansprüche 1 bis 9 hergestellt wurde.

**Revendications**

**1.** Procédé de production d'amylopectine cisaillée en poudre, ledit procédé comprenant les étapes consistant à extruder un matériau farineux comprenant plus de 83 % en poids d'amylopectine, optionnellement mélangée à de l'eau ; dans lequel la teneur en eau du matériau soumis à l'extrusion, incluant toute eau ajoutée, est comprise dans la gamme allant de 6 à 30 % en poids, et la température du matériau pendant l'extrusion étant comprise dans la gamme allant de 120 à 220°C.

**2.** Procédé selon la revendication 1, dans lequel le matériau farineux comprend plus de 90 % en poids d'amylopectine.

**3.** Procédé selon l'une quelconque des revendications précédentes, dans lequel la température du matériau pendant l'extrusion est comprise dans la gamme allant de 140 à 200°C.

**4.** Procédé selon la Revendication 3, dans lequel la température du matériau pendant l'extrusion est comprise dans la gamme allant de 140 à 185°C.

**5.** Procédé selon l'une quelconque des revendications précédentes, dans lequel la teneur en eau du matériau soumis à extrusion est comprise dans la gamme allant de 12 à 24 % en poids.

**6.** 6. Procédé selon la revendication 5, dans lequel la teneur en eau du matériau soumis à l'extrusion est comprise dans la gamme allant de 12 à 18 % en poids.

**7.** Procédé selon l'une quelconque des revendications précédentes, dans lequel le matériau farineux est un amidon cireux.

**8.** Procédé selon la revendication 7, dans lequel le matériau farineux est sélectionné à partir du groupe composé de l'amidon de maïs cireux, de l'amidon de riz cireux et des mélanges de ceux-ci.

**9.** Procédé selon l'une quelconque des revendications précédentes, dans lequel l'extrusion est menée à bien dans une extrudeuse munie au moins de deux éléments de vis.

**10.** Amylopectine cisaillée en poudre préparée en accord avec le procédé revendiqué dans l'une quelconque des revendications précédentes.

**11.** Aliment épaissi à l'amidon comprenant de l'amylopectine préparée en accord avec le procédé revendiqué dans l'une quelconque des revendications 1 à 9.